# FASCICULE DE BREVET EUROPEEN

(11) **EP 2 452 423 B1**
(45) Date de publication et mention de la délivrance du brevet: **24.04.2013**
(21) Numéro de dépôt: 10729899.4
(22) Date de dépôt: 08.07.2010
(51) Int. Cl.: H02M 1/42, H02M 3/158

(54) **NOUVELLE ARCHITECTURE DE COMPENSATEUR DES FACTEURS DE PUISSANCE ET D'HARMONIQUES POUR RESEAU DE DISTRIBUTION D'ENERGIE**
NEUARTIGER AUFBAU EINES KOMPENSATORS FÜR LEISTUNSGFAKTOREN UND HARMONISCHE SCHWINGUNGEN FÜR EIN STTROMVERTEILUNGSNETZ
NOVEL ARCHITECTURE OF A COMPENSATOR FOR POWER FACTORS AND HARMONICS FOR A POWER DISTRIBUTION NETWORK

(30) Priorité: 10.07.2009 FR 0903429
(43) Date de publication de la demande: 16.05.2012
(73) Titulaire: THALES, 92200 Neuilly-sur-Seine (FR)
(72) Inventeur: THOMAS, Philippe, F-29217 Plougonvelin (FR); LE BAS, Philippe, F-29200 Brest (FR); CUSSAC, Philippe, F-81000 Albi (FR); FOCH, Henri, F-31650 St Orens de Gameville (FR); FERRER, Didier, F-31520 Ramonville Saint Agne (FR); LACOSTE, Aymeric, F-31300 Toulouse (FR)
(74) Mandataire: Lucas, Laurent Jacques
(86) Numéro de dépôt international: PCT/EP2010/059814
(87) Numéro de publication internationale: WO 2011/003975

(56) Documents cités:
- FR-A1- 2 895 167
- US-A1- 2009 027 931
- PACHECO V M ET AL: "An on line no-break with power factor correction and output voltage stabilization" INTELEC 2002. 24TH. INTERNATIONAL TELECOMMUNICATIONS ENERGY CONFERENCE. MONTREAL, QUEBEC, CANADA, SEPT. 29 - OCT. 3, 2002; [INTELEC. INTERNATIONAL TELECOMMUNICATIONS ENERGY CONFERENCE], NEW YORK, NY : IEEE, US, vol. CONF. 24, 29 septembre 2002 (2002-09-29), pages 438-443, XP010614659 ISBN: 978-0-7803-7512-3

## Description

L'invention concerne le domaine général des systèmes électriques de puissance connectés aux réseaux de distribution d'énergie. Elle concerne plus particulièrement les dispositifs chargés de compenser les variations de charge que doit supporter un réseau de distribution d'énergie électrique principalement lorsque que la charge varie de manière rapide. Elle est particulièrement adaptée aux systèmes conçus pour alimenter des charges pulsées

Un réseau de distribution d'énergie électrique est généralement constitué d'une ligne de distribution sur laquelle sont reliés les équipements dont le réseau assure l'alimentation, et qui "chargent" plus ou moins le réseau selon la valeur de l'impédance qu'ils présentent. Il comporte également des moyens pour produire l'énergie électrique délivrée ainsi que des moyens de commande qui agissent sur les moyens de production d'énergie électrique de façon à ce que l'énergie électrique produite soit à tout instant le plus possible adaptée à la charge imposée par les équipements montés sur la ligne d'alimentation.

Le réseau est généralement configuré et dimensionné pour qu'en fonctionnement en régime établi, et compte tenu de variations de charge lentes, il puisse délivrer, avec une certaine marge de sécurité, la puissance électrique demandée par l'ensemble des équipements raccordés. Autrement dit, ces moyens sont dimensionnés pour délivrer une puissance moyenne donnée, tout en acceptant, dans une certaine mesure, des variations autour de cette valeur moyenne de puissance délivrée, variations de préférence faibles et lentes. C'est pourquoi, il est souvent nécessaire d'intercaler entre la charge appliquée et le réseau, un dispositif capable de détecter les variations de cette charge et de réagir à ces variations en faisant en sorte d'en limiter l'impact, ou même, en fournissant la totalité du supplément de puissance demandé, en utilisant pour cela un dispositif de stockage d'énergie.

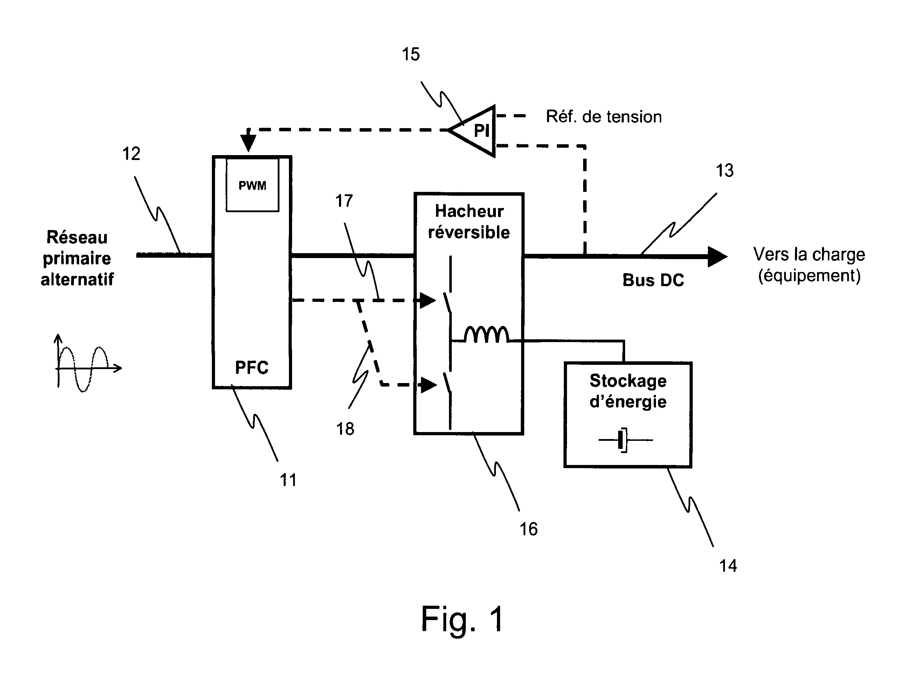

Pour réaliser l'alimentation à partir d'un réseau de distribution alternatif d'équipements de puissance, on interpose généralement comme l'illustre la figure 1, une structure comportant un dispositif communément appelé PFC, acronyme de l'expression anglo-saxonne "Power Factor Corrector" ("correcteur de facteur de puissance" en français). Ce dispositif de structure connue par ailleurs assure la conversion du courant alternatif fourni par le réseau alternatif en courant continu. Ce type de dispositif comporte principalement des moyens de conversion AC-DC, ainsi que des moyens pour assurer l'asservissement de la tension DC produite à une valeur de consigne donnée qui correspond à la tension d'alimentation requise par l'équipement raccordé. De la sorte, une variation de la charge de cet équipement provoque normalement un accroissement du courant produit par le PFC qui absorbe alors une Puissance plus importante sur le réseau.

Le PFC est généralement associé à un ensemble de moyens formant une chaine de réaction dont le rôle est de détecter les variations de charge présentées par l'équipement raccordé au réseau, variations de charge qui se traduisent par une chute de la tension DC délivrée à l'équipement. Lorsqu'une telle chute de tension est détectée les moyens qui constituent la chaîne de réaction agissent sur le PFC, de façon à ce que celui-ci délivre un courant DC répondant à l'appel de courant induit par la variation de charge.

Un inconvénient connu des dispositifs de type PFC, est qu'ils doivent présenter un temps de réaction relativement long, afin notamment de préserver la qualité du réseau alternatif primaire (creux de tension et harmoniques), réseau qui est généralement alimenté par des moyens incapables, par nature, de faire face très rapidement à un accroissement de la puissance demandée. Le PFC comporte donc une boucle d'asservissement en tension lente, dont la fréquence de coupure est très inférieure à la fréquence du réseau, ceci afin de lui permettre d'absorber sur le primaire un courant alternatif en phase avec la tension et comportant le moins d'harmoniques possibles.

La faible bande passante de l'asservissement du PFC limite donc la qualité de la régulation de la tension DC face à des variations de charge rapides, et en particulier dans le cas d'une charge de nature pulsée. Ainsi, pour répondre à une brusque variation de la charge présentée par l'équipement raccordé au réseau, on est contraint de prévoir des moyens complémentaires capables de pallier pendant un intervalle de temps relativement long l'incapacité du PFC de délivrer la puissance nécessaire.

Ces moyens complémentaires sont généralement des moyens capables de stocker et de restituer de l'énergie électrique, des batteries d'accumulateurs ou de condensateurs principalement. Ces moyens de stockage d'énergie sont ici dimensionnés de façon à assurer un apport d'énergie complémentaire pendant l'intervalle de temps nécessaire au PFC pour être en mesure, de faire face à la demande d'énergie supplémentaire de l'équipement et pour maintenir une alimentation satisfaisante de l'équipement malgré la variation de charge.

En pratique, comme l'illustre la figure 1, il est connu de réaliser une telle structure, en associant au PFC des moyens de stockage d'énergie par l'intermédiaire d'un dispositif de type hacheur. Le circuit hacheur est ici conçu pour adopter alternativement deux états de fonctionnement, un premier état dans lequel il est configuré pour décharger l'énergie électrique stockée dans les moyens de stockage sur la ligne DC qui alimente l'équipement raccordé au réseau, et un second état dans lequel il est configuré pour recharger des moyens de stockage à partir du courant électrique produit par le PFC.

Selon ce mode de réalisation connu, le passage d'un état à l'autre est directement commandé par l'état de fonctionnement du PFC. Ainsi, lorsque le PFC se trouve, à un instant donné, dans l'incapacité de produire la puissance nécessaire, le hacheur est commandé de façon à décharger les moyens de stockage d'énergie, pour que ces derniers apportent sur la ligne d'alimentation un courant complémentaire qui vient s'ajouter au courant produit par le PFC pour fournir à l'équipement la puissance requise. De même, lorsque le PFC se trouve en mesure de fournir une puissance supérieure à la puissance demandée, le hacheur est commandé de façon à recharger les moyens de stockage d'énergie. La commande du hacheur 16 est généralement réalisée à partir d'informations fournies directement par le PFC, qui indique que le courant fourni par le PFC est suffisant ou non pour alimenter correctement l'équipement. Un tel dispositif est décrit dans le document de brevet américain US2009/0027931

Cependant, dans la mesure où le processus de régulation de la puissance de sortie par le PFC est un processus lent, une brusque variation de la charge imposée, n'est prise en compte par le PFC qu'au bout d'un laps de temps relativement long. Par conséquent, durant un laps de temps donné qui suit l'instant correspondant à une brusque variation de la charge, le PFC 11 ne manifeste aucune réaction de sorte que, le hacheur 16 n'étant pas commandé de façon à décharger les moyens de stockage, il se produit un déficit de puissance fournie qui se traduit par une chute de la tension délivrée.

Ce mode de réalisation connu conduit finalement à l'obtention d'un réseau de distribution d'énergie présentant une régulation insuffisante, en particulier face à de brusques et importantes variations de charge, de nature à perturber de manière importante le fonctionnement de l'équipement alimenté.

Un but de l'invention est de proposer une structure à base de PFC permettant de réaliser un réseau de distribution d'énergie, sous forme de courant continu, pouvant alimenter de manière satisfaisante un équipement imposant de brusques et importantes variations de charge (i.e. de consommation), autrement dit une structure présentant une réponse à ces variations sensiblement plus rapide que les structures connues dont le principe à été évoqué précédemment.

A cet effet l'invention a pour objet un système redresseur pour réseau primaire de distribution d'alimentation électrique alternative, à compensation du facteur de puissance et du taux d'harmoniques. Le dispositif selon l'invention comporte au moins un circuit PFC relié sur le réseau de distribution primaire et délivrant une alimentation continue sur une ligne d'alimentation continue et des moyens de stockage et de restitution d'énergie électrique, reliés à la ligne d'alimentation continue par l'intermédiaire d'un circuit de commutation. Ce circuit de commutation est configuré pour présenter deux états de fonctionnement, un premier état de fonctionnement dans lequel il réalise le décharge sur la ligne d'alimentation continue de l'énergie électrique stockée dans les moyens de stockage et un second état de fonctionnement dans lequel il réalise la charge des moyens de stockage par la ligne d'alimentation continue. Le dispositif selon l'invention comporte en outre deux circuits de commande croisés:
- un premier circuit de commande qui détermine l'état de fonctionnement du circuit de commutation par comparaison de la valeur de la tension sur la ligne d'alimentation à une première tension de référence, le circuit de commutation étant positionné dans le premier état de fonctionnement si la tension sur la ligne d'alimentation est inférieure à la première tension de référence et dans le second état de fonctionnement dans le cas contraire,
- un second circuit de commande qui régule l'énergie délivrée par le PFC sur la ligne d'alimentation en fonction de la tension présente en sortie des moyens de stockage, par comparaison de cette tension à une seconde tension de référence.

Dans une forme de mise en oeuvre préférée du système selon l'invention, la tension de service des moyens de stockage d'énergie électrique étant sensiblement inférieure à la tension électrique délivrée par la ligne d'alimentation, le circuit de commutation est un circuit hacheur réversible, qui élève la tension électrique délivrée par les moyens de stockage lorsque ceux-ci sont déchargés sur la ligne d'alimentation et qui abaissent la tension du courant électrique prélevé sur la ligne d'alimentation lorsque les moyens de stockage sont rechargés par la ligne d'alimentation.

Dans une forme de réalisation particulière du système selon l'invention, les moyens de stockage d'énergie comportent une batterie d'accumulateurs.

Dans une autre forme de réalisation particulière du système selon l'invention, les moyens de stockage d'énergie comportent une batterie de condensateurs.

Dans une forme de mise en oeuvre préférée du système selon l'invention, le premier et le second circuit de commande comportent un amplificateur intégrateur (PI) qui intègre la variation de la tension mesurée par rapport à la tension de référence.

Dans une forme de réalisation particulière du système selon l'invention, le second circuit de commande comportant en outre un circuit de filtrage configuré pour limiter la bande passante de la boucle de commande du PFC.

L'invention a également pour objet un réseau secondaire de distribution d'énergie électrique alternative à facteur de charge et taux d'harmoniques améliorés, qui comporte un système redresseur selon l'invention et un circuit onduleur monté en sortie dudit système redresseur.

Selon l'invention, le circuit onduleur est un circuit onduleur commandé, configuré pour délivrer des impulsions de courant alternatif sous l'action d'une commande de découpage.

Dans une variante de réalisation du Réseau secondaire de distribution d'énergie électrique alternative selon l'invention, le circuit onduleur est un circuit onduleur multi-niveaux.

Dans une autre variante de réalisation du Réseau secondaire de distribution d'énergie électrique alternative selon l'invention, le circuit onduleur est un circuit onduleur multi-phases.

Les caractéristiques et avantages de l'invention seront mieux appréciés grâce à la description qui suit, description qui expose le principe de l'invention en s'appuyant sur les figures annexées qui représentent:
- la figure 1, le schéma de principe de la structure type conforme à l'art antérieur connu, d'un réseau de production et de distribution d'énergie électrique continue bâti autour d'un PFC,
- la figure 2, le schéma de principe de la structure type selon l'invention, d'un réseau de production et de distribution d'énergie électrique continue bâti autour d'un PFC;
- la figure 3, un chronogramme de principe illustrant les états de fonctionnement de la structure selon l'invention;
- la figure 4, un chronogramme de principe illustrant les états de fonctionnement de la structure selon l'invention considérée dans une variante de réalisation;
- la figure 5, un exemple d'application de la structure de réseau de distribution d'énergie selon l'invention.;

Comme il a été dit précédemment la figure 1 est une représentation schématique de la structure générale d'un système de régulation connu destiné à être installé sur le réseau de distribution d'énergie électrique et dont la principale fonction est à la fois de permettre d'améliorer le facteur de puissance et d'harmonique du courant électrique délivré par le réseau primaire et d'assurer une adaptation permanente de la puissance délivrée à la puissance demandée au réseau.

Cette structure connue intègre un dispositif 11 appelé PFC selon l'acronyme la dénomination anglo-saxonne "Power Factor Corrector" ou "Correcteur de Facteur de Puissance" en français. Le PFC est alimenté en entrée par le réseau primaire alternatif de distribution d'énergie 12, et délivre en sortie une alimentation électrique continue 13, qui peut être utilisée pour produire une tension alternative.

La structure interne d'un PFC, connu par ailleurs, n'est pas décrite ici. On se borne à rappeler que le PFC est un dispositif comportant des boucles d'asservissement contrôlées en interne et dont le rôle est de commuter sur la ligne d'alimentation des éléments réactifs de façon à réguler le facteur de puissance du réseau en fonction de la charge imposée. De manière générale, il comporte également une entrée de commande permettant de le faire fonctionner, comme l'illustre la figure 1, dans une configuration comportant une boucle de régulation externe prenant en compte la tension de l'alimentation délivrée 13. Dans l'illustration de la figure 1, la commande externe est constituée par le signal produit par un intégrateur proportionnel PI 15 sur les entrées duquel sont appliquées une tension de référence et la tension d'alimentation délivrée 13.

Comme il a été dit précédemment, la vitesse de réaction du PFC à une variation de la nature de la charge imposée au réseau est lente, cette lenteur étant induite par la nécessité de limiter le taux d'harmoniques produites sur le réseau. C'est pourquoi on parle plutôt d'une régulation de l'alimentation délivrée que d'un asservissement. En pratique la bande passante de la chaine de réaction du PFC est très inférieure à la fréquence du réseau, un réseau alternatif 50 Hz par exemple, sur lequel il est interposé. Comme il a également été dit précédemment, cette caractéristique a pour conséquence que le PFC ne permet pas de réaliser une régulation correcte de la puissance délivrée par le réseau sur la ligne de distribution 13, en aval du PFC. En particulier, on assiste, dans le cas d'une variation brusque et importante de la charge imposée au réseau, à une impossibilité de fournir de manière instantanée la puissance demandée par l'équipement responsable de cette brusque variation. Cette impossibilité se traduit, pendant un laps de temps donné, par une chute de tension temporaire qui peut engendrer un mauvais fonctionnement de l'équipement pendant ce laps de temps.

Pour pallier cet inconvénient, il est connu comme cela a été dit précédemment d'associer le PFC à des moyens de stockage d'énergie 14 dimensionnés de façon à fournir un complément d'énergie sur le réseau, en aval du PFC, durant les périodes de fonctionnement pendant lesquelles le PFC ne fournit pas la totalité de la puissance demandée. Ces moyens sont couplés à la ligne de distribution d'énergie 13 par l'intermédiaire d'un dispositif hacheur 16 qui présente alternativement deux états de fonctionnement:
- un premier état où il décharge sur la ligne 13 la réserve d'énergie stockée dans les moyens 14, le courant délivré par ces moyens venant s'ajouter au courant produit par le PFC 11;
- un second état où il recharge les moyens 14 en énergie électrique.

La commande de l'état de fonctionnement du hacheur 16 est généralement réalisée, comme l'illustre les flèches 17 et 18 de la figure 1, à partir d'une information relative à l'état de fonctionnement du PFC 11. Cette information peut par exemple être déduite de la valeur d'une tension de consigne mesurée au niveau des boucles de régulation du courant délivré du PFC, tension qui par Principe varie lentement dans un PFC.

Ainsi, si le PFC est dans un état dans lequel il ne peut pas fournir la totalité de la puissance demandée, le hacheur 16 est placé dans le premier état. Inversement, si le PFC est dans un état dans lequel il peut fournir une puissance supérieure à la puissance demandée, le hacheur 16 est placé dans le second état.

Comme l'illustre la figure 1, cette structure connue de régulation du facteur de charge et du taux d'harmoniques, structure simple couramment mise en oeuvre, présente ainsi deux circuits de commande indépendants 15 et 17-18.

Le premier circuit de commande 15, de régulation, agit sur le PFC 11 de façon à ce que celui-ci adapte son fonctionnement de façon à fournir la puissance demandée et éviter la chute de la tension délivrée à l'équipement alimenté. Du fait de la faible bande passante des boucles de régulation du PFC, la réactivité de ce premier circuit est faible et la modification du fonctionnement du PFC n'étant effective qu'au bout d'un laps de temps dont la durée est fonction de la bande passante.

Le deuxième circuit de commande 17, 18 agit, quant à lui, sur le hacheur 16 de façon à procéder à la décharge ou à la charge des moyens de stockage d'énergie 14 en fonction de l'information transmise par le PFC 11, l'ordre de décharger la réserve d'énergie n'étant donné au hacheur que lorsque le PFC a commencé à réagir à la brusque variation de la charge imposée et à un accroissement de la demande d'énergie fournie.

Par suite, du fait de la lenteur de réaction du PFC 11, une brusque variation de la charge imposée ne se traduit pas de manière instantanée par un basculement de l'état de fonctionnement du hacheur 16 vers l'état de fonctionnement correspondant à une décharge sur le réseau de l'énergie stockée dans les moyens de stockage 14. Par voie de conséquence, aucun apport d'énergie n'est encore réalisé et la baisse de tension persiste tant que le PFC ne manifeste une réaction à cette chute de tension.

On obtient ainsi une régulation imparfaite de la puissance délivrée sur le réseau en particulier lors de variation brusques et importante de la charge imposée au réseau. Cette structure connue, couramment mise en oeuvre ne permet donc pas à la fois d'obtenir une bonne régulation du facteur de puissance et du taux d'harmonique et d'opérer une régulation totalement efficace de la puissance délivrée par le réseau.

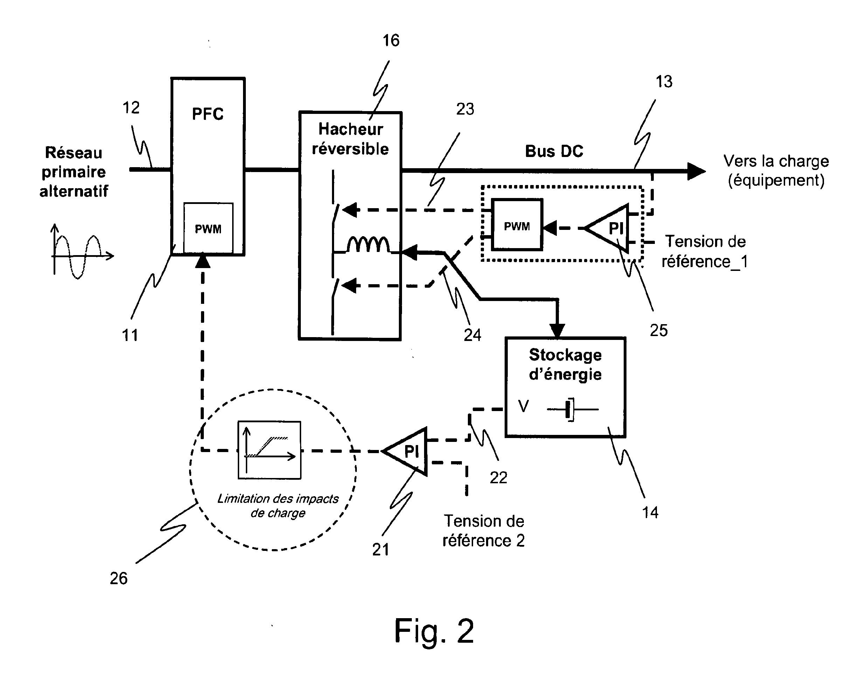

La figure 2 est une représentation schématique de la structure générale du système de régulation selon l'invention.

Le dispositif illustré ici a pour objet principal de remplir les mêmes objectifs que le système connu illustré par la figure 1. A ce titre il comporte les mêmes éléments. Il comporte ainsi un PFC 11 monté sur le réseau principal et des moyens de stockage d'énergie électrique 14 reliés à la ligne d'alimentation 13 en aval du PFC par rapport à la source d'énergie primaire un réseau alternatif mono ou triphasé par exemple. Selon l'invention les moyens de stockage d'énergie 14 peuvent par exemple consister en une batterie d'accumulateurs ou de condensateurs.

Comme pour le système décrit précédemment les moyens de stockage d'énergie 14 sont reliés à la ligne d'alimentation 13 par l'intermédiaire d'un circuit hacheur 16 commandé, qui selon la valeur de la commande qui lui est appliquée assure la décharge de moyens de stockage d'énergie électrique 14 sur la ligne d'alimentation 13 ou bien la recharge des mêmes moyens de stockage 14 à partir du courant électrique circulant sur cette même ligne 13. Le hacheur 16 assure également l'élévation de la tension produite par les moyens de stockage 14 jusqu'à la valeur nominale de la tension délivrée par la ligne d'alimentation 13 lors de l'opération de décharge et l'abaissement de la tension de la ligne d'alimentation jusqu'à la tension nominale des moyens de stockage 14 lors de l'opération de recharge de ces moyens.

Le système selon l'invention comporte également comme le système connu deux circuits de commande et de régulation, un des circuits étant destiné à opérer un asservissement du PFC sur la tension délivrée et l'autre circuit étant destiné à effectuer la sélection de l'état de fonctionnement, décharge ou charge des moyens de stockage 14, du circuit hacheur 16. Cependant, à la différence du système connu décrit précédemment, l'asservissement du PFC n'est pas directement réalisé à partir de la valeur de la tension mesurée sur la ligne d'alimentation 13, mais sur la valeur de la tension présente à la sortie des moyens de stockage d'énergie 14. De même, à la différence du système connu décrit précédemment, la commande du circuit hacheur n'est pas directement produite par le PFC ou déduite de l'état de fonctionnement du PFC, mais directement synthétisée à partir de la tension délivrée sur la ligne d'alimentation 13. De la sorte, à la différence de ce qui se produit dans le système décrit précédemment, l'apport d'énergie complémentaire par les moyens de stockage d'énergie 14 peut avantageusement être réalisé instantanément dès l'apparition d'une chute de la tension de la ligne d'alimentation 13, sans attendre une quelconque réaction du PFC.

Selon l'invention, les circuits de commande du PFC 11 et du hacheur 16 ont une structure similaire classique centrée autour d'un amplificateur intégrateur ou "PI" qui mesure la différence entre une tension mesurée, la tension sur la ligne d'alimentation pour le PI 25 du circuit de commande du hacheur 16 et la tension délivrée par les moyens de stockage 14 pour le PI 21 du circuit de commande du PFC, et une tension de référence de valeur appropriée constituant la valeur de la tension de régulation. Selon l'invention chaque amplificateur intégrateur PI est associé à une électronique de commutation appropriée au fonctionnement du circuit commandé (PFC ou hacheur). Cette électronique de commutation est symbolisée par les encadrés intitulés "PWM" sur la figure (PWM est l'acronyme de l'expression anglo-saxonne "pulse width modulator", qui signifie "modulateur de largeur d'impulsion" en français).

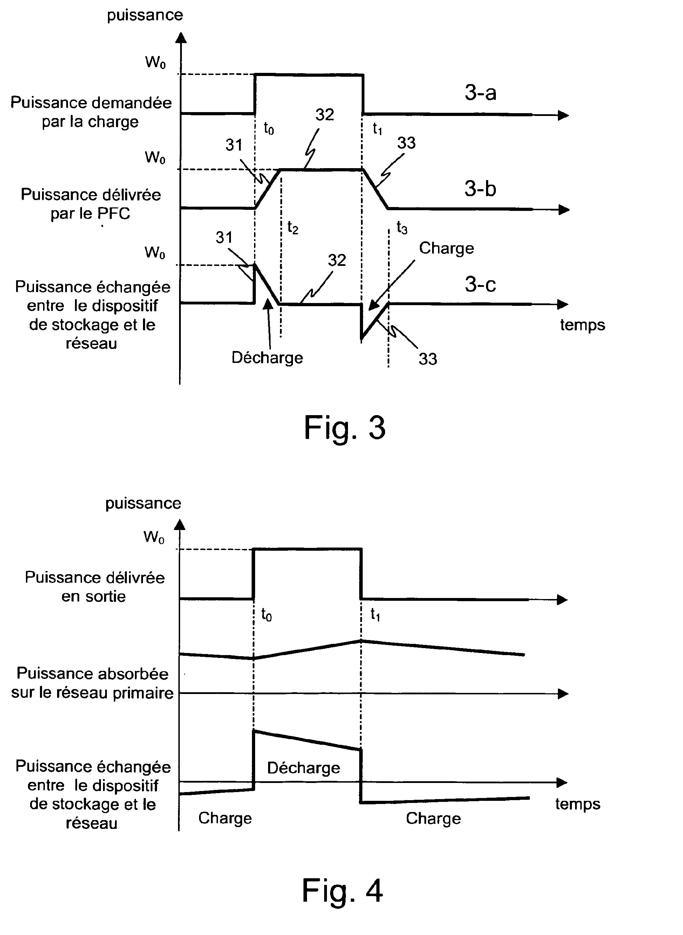

L'exemple de la figure 3 met en évidence le caractère particulièrement avantageux, en terme de régulation de la puissance délivrée, du système selon l'invention. II met également en évidence les différentes phases de fonctionnement du système.

Dans l'exemple illustré ici, l'équipement alimenté par le réseau de distribution d'énergie est un équipement dont la consommation est décrite par le chronogramme 3-a. Un tel équipement présente des périodes d'activité de durée Δt = t₁-t₀ déterminée durant lesquelles il consomme une énergie de valeur significative constante, séparées par des intervalles de temps plus ou moins long durant lesquels il ne consomme pas d'énergie ou une énergie de valeur non significative. La charge imposée au réseau par un tel équipement apparaît donc comme brusquement variable.

Le chronogramme 3-b présente l'évolution de la puissance délivrée par le PFC dans un tel cas de fonctionnement. On peut constater que dans une telle circonstance, la réponse du PFC à la brusque variation de la puissance demandée présente, du fait de la lenteur de réaction de celui-ci, trois phases de fonctionnement:
- une première phase 31 qui s'étend de l'instant t₀ à un instant t₂ durant laquelle la puissance délivrée par le PFC 11 augmente régulièrement pour atteindre la valeur demandée. Durant cette phase on assiste, en l'absence de moyens supplétifs, à un déficit de la puissance délivré à l'équipement;
- une deuxième phase 32 qui s'étend de l'instant t₂ à l'instant t₁ durant laquelle le PFC délivre de manière permanente la puissance demandée. Durant cette phase le PFC délivre à lui seul l'énergie demandée;
- une troisième phase 33 qui s'étend de l'instant t₁ à un instant t₃ durant laquelle, la puissance consommée par l'équipement étant brusquement devenue négligeable, le PFC diminue progressivement la valeur de la puissance délivrée. Durant cette dernière phase le PFC délivre une énergie qui n'est pas absorbée par l'équipement, mais par les moyens de stockage d'énergie électrique 14.

Le chronogramme 3-c présente quant à lui, pour l'exemple d'équipement choisi, l'évolution au cours du temps, de la puissance échangée entre les moyens de stockage d'énergie 14 et la ligne d'alimentation 13 dans le système selon l'invention.

Comme on peut le constater, cet échange comporte avantageusement trois phases, synchrone des phases de fonctionnement du PFC.

Durant une première phase 31 le PFC n'étant pas en mesure de délivrer la puissance demandée, la tension de la ligne d'alimentation 13 tend à diminuer de sorte que le circuit de commande du hacheur 16 active la décharge des moyens de stockage d'énergie. L'énergie électrique est alors transférée des moyens de stockage vers la ligne d'alimentation de façon à suppléer le PFC. La puissance transmise par les moyens de stockage diminue régulièrement durant cette phase à mesure que la puissance délivrée par le PFC augmente, jusqu'à l'instant t₁ pour lequel la puissance transmise par les moyens de stockage devient négligeable, voire nulle. A l'issue de cette étape la tension V délivrée par les moyens de stockage 14 a chuté à une valeur sensiblement inférieure à sa valeur nominale.

Durant une deuxième phase 32 la puissance échangée entre la ligne d'alimentation 13 et les moyens de stockage d'énergie électrique 14 reste négligeable voire nulle, l'énergie délivrée par le PFC étant alors consommée par l'équipement;

Durant une troisième phase 33 la puissance absorbée par l'équipement est redevenue brusquement nulle, de sorte que la tension de la ligne d'alimentation tend à augmenter de sorte que le circuit de commande du hacheur 16 active la recharge des moyens de stockage d'énergie 14. Cependant, la tension délivrée par les moyens de stockage 14 restant, pendant un certain temps, inférieure à la valeur nominale, le circuit de commande du PFC agit sur ce dernier de façon à ce qu'il continue à délivrer une puissance électrique non nulle sur la ligne 13, la puissance délivrée diminuant à mesure que la tension aux bornes des moyens de stockage d'énergie électrique 14 tend à atteindre sa valeur nominale. La puissance délivrée par le PFC est alors totalement transférée aux moyens de stockage. Par suite, lorsque les moyens de stockage d'énergie sont totalement rechargés, le circuit de commande du PFC stoppe la délivrance d'énergie.

Ainsi comme on peut le constater à partir de la figure 3 le système selon l'invention permet avantageusement de délivrer à chaque instant la puissance demandée par l'équipement alimenté et ce, bien que le PFC ne soit par nature pas en mesure de faire face de manière instantanée à une brusque et importante variation de la puissance demandée. En outre, de par leurs agencements, les circuits de commande du PFC 11 et du circuit hacheur 16 permettent de piloter le fonctionnement du PFC de façon à assurer le rechargement des moyens de stockage 14 par ce dernier lorsque l'énergie demandée par l'équipement alimenté devient nulle.

Il est à noter que le PFC ne produit pas lui-même l'énergie électrique délivrée sur la ligne d'alimentation 13, l'action du PFC étant de réguler le facteur de puissance et le taux d'harmonique. L'énergie est prélevée sur un réseau de distribution d'énergie primaire. De la sorte, lorsque le réseau secondaire alimenté par le PFC présente une brusque variation de consommation d'énergie, la puissance prélevée par le PFC sur le réseau primaire s'accroit en conséquence, de manière cependant moins brutale du fait de la lenteur de réaction du PFC. Néanmoins, dans le cas ou la variation de la puissance consommée est réellement très importante et brève, par rapport à la valeur moyenne fournie par le réseau primaire par exemple il peut être judicieux de prévoir des moyens pour limiter l'impact de charge sur le réseau primaire, c'est-à-dire l'accroissement de la puissance absorbée sur ce réseau.

Le système selon l'invention peut avantageusement être adapté de manière simple, de façon à répondre à cette exigence. Pour ce faire, on peut par exemple ajouter au circuit de commande du PFC un dispositif de filtrage 26 dont le rôle est précisément de limiter les impacts de charge, c'est à dire les brusques variation de la puissance absorbée par le PFC sur le réseau primaire en réponse à une variation brusque de la charge. Cependant, ce dispositif de filtrage a pour effet de ralentir encore la réponse du PFC à une brusque augmentation de la puissance consommée, il est alors nécessaire de dimensionner les moyens de stockage d'énergie 14 en conséquence. On obtient alors un fonctionnement du système de régulation selon l'invention proche de celui illustré par la figure 4 pour lequel l'essentiel de la puissance fournie à l'équipement alimenté est délivrée par les moyens de stockage 14. Le PFC ne fournit alors, avantageusement, que la valeur moyenne de la puissance absorbée par la charge et n'a pas à être dimensionné pour la puissance crête fournie par le système.

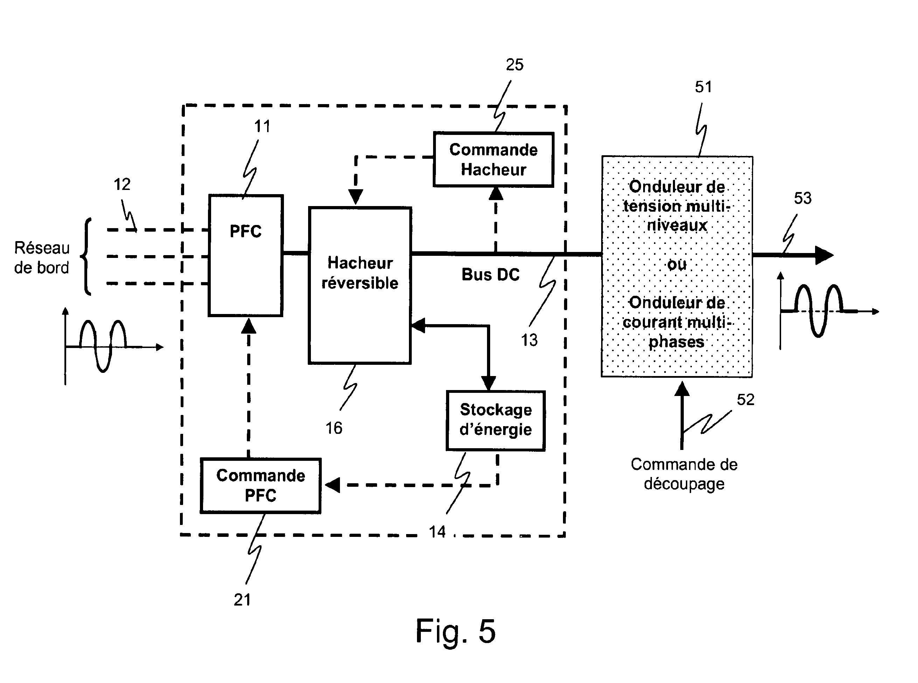

Le système de régulation selon l'invention peut avoir de multiples applications, en particulier pour alimenter des équipements dont le bon fonctionnement passe par la maitrise de la tension d'alimentation. La figure 5 illustre l'application du système selon l'invention à la réalisation d'un réseau de distribution d'énergie adapté à un émetteur d'ondes acoustiques. Cette application est cependant présentée à titre d'exemple non limitatif.

Dans cette application, le système selon l'invention alimente un circuit onduleur 51 configuré pour convertir le courant continu délivré par le système sur la ligne d'alimentation 13 en un courant alternatif lui-même destiné à alimenter une charge d'utilisation par l'intermédiaire d'une ligne d'alimentation 53. La charge d'utilisation peut par exemple consister en un ensemble de transducteurs sonars, le circuit onduleur étant alors un onduleur multi-niveaux, c'est-à-dire un dispositif constitué de plusieurs convertisseurs utilisés en générateurs de tension associés en série et dont les tensions délivrées sont sommées. Alternativement l'onduleur peut être un onduleur multi-phases, c'est-à-dire un dispositif constitué de plusieurs convertisseurs utilisés en générateurs de courant associés en parallèle et dont les courants délivrés sont sommés. A cet effet l'onduleur est configuré pour produire un courant alternatif lorsqu'il est sollicité, par l'intermédiaire d'une commande de modulation, de découpage, 52. De la sorte, un train d'ondes sinusoïdales est produit par l'onduleur lorsque celui-ci est activé par la commande 52.

L'utilisation du système selon l'invention pour réaliser une telle alimentation permet avantageusement de produire des impulsions sinusoïdales (i.e. des trains d'ondes sinusoïdales) affectées d'un très faible taux d'harmoniques en tension, tout en garantissant la tenue des normes en vigueur, en termes de Compatibilité électromagnétique (CEM) et de limitation du taux d'harmoniques en courant produites sur le réseau. Elle permet également de réaliser une alimentation capable de délivrer de manière brusque et limitée dans le temps de fortes puissances, tout en limitant par ailleurs l'impact correspondant des variations de puissance absorbée sur le réseau primaire, puissance du réseau primaire naturellement limitée.

## Revendications

1. Système redresseur pour réseau primaire (12) de distribution d'alimentation électrique alternative, à compensation du facteur de puissance et du taux d'harmoniques, comportant au moins un circuit PFC (11) relié sur le réseau de distribution primaire et délivrant une alimentation continue sur une ligne d'alimentation continue (13) et des moyens de stockage et de restitution d'énergie électrique (14) reliés à la ligne d'alimentation continue (13) par l'intermédiaire d'un circuit de commutation (16) configuré pour présenter deux états de fonctionnement, un premier état de fonctionnement dans lequel il réalise la décharge sur la ligne d'alimentation continue (13) de l'énergie électrique stockée dans les moyens de stockage (14) et un second état de fonctionnement dans lequel il réalise la charge des moyens de stockage (13) par la ligne d'alimentation continue(13); **caractérisé en ce qu'**il comporte en outre deux circuits de commande (21, 25):
- un premier circuit de commande (25) qui détermine l'état de fonctionnement du circuit de commutation par comparaison de la valeur de la tension sur la ligne d'alimentation (13) à une première tension de référence, le circuit de commutation (16) étant positionné dans le premier état de fonctionnement si la tension sur la ligne d'alimentation (13) est inférieure à la première tension de référence et dans le second état de fonctionnement dans le cas contraire;
- un second circuit de commande (21) qui régule l'énergie délivrée par le PFC (11) sur la ligne d'alimentation (13) en fonction de la tension présente en sortie des moyens de stockage (14), par comparaison de cette tension à une seconde tension de référence.

2. Système selon la revendication 1, **caractérisé en ce que**, la tension de service des moyens de stockage d'énergie électrique (14) étant sensiblement inférieure à la tension électrique délivrée par la ligne d'alimentation (13), le circuit de commutation (16) est un circuit hacheur réversible, qui élève la tension électrique délivrée par les moyens de stockage (14) lorsque ceux-ci sont déchargés sur la ligne d'alimentation (13) et qui abaissent la tension du courant électrique prélevé sur la ligne d'alimentation (13) lorsque les moyens de stockage (14) sont rechargés par la ligne d'alimentation(13).

3. Système selon l'une des revendications 1 ou 2, **caractérisé en ce que** les moyens de stockage d'énergie (14) comportent une batterie d'accumulateurs.

4. Système selon l'une des revendications 1 ou 2, **caractérisé en ce que** les moyens de stockage d'énergie (14) comportent une batterie de condensateurs.

5. Système selon l'une quelconque des revendications précédentes, **caractérisé en ce que** le premier et le second circuit de commande (21, 25) comportent un amplificateur intégrateur (PI) qui intègre la variation de la tension mesurée par rapport à la tension de référence.

6. Système selon l'une quelconque des revendications précédentes; **caractérisé en ce que**, le second circuit de commande comportant en outre un circuit de filtrage (26) configuré pour limiter la bande passante de la boucle de commande du PFC.

7. Réseau secondaire de distribution d'énergie électrique alternative à facteur de charge et taux d'harmoniques améliorés, **caractérisé en ce qu'**il comporte un système redresseur selon l'une quelconque des revendications précédentes et un circuit onduleur (51) monté sur la ligne d'alimentation continue (13) dudit système.

8. Réseau secondaire de distribution d'énergie électrique alternative selon la revendication 7, **caractérisé en ce que** le circuit onduleur (51) est un circuit onduleur commandé, configuré pour délivrer des impulsions de courant alternatif sous l'action d'une commande de découpage (52).

9. Réseau secondaire de distribution d'énergie électrique alternative selon l'une des revendications 7 ou 8, **caractérisé en ce que** le circuit onduleur (51) est un circuit onduleur multi-niveaux.

10. Réseau secondaire de distribution d'énergie électrique alternative selon l'une des revendications 7 ou 8, **caractérisé en ce que** le circuit onduleur (51) est un circuit onduleur multi-phases.

## Claims

1. Rectifier system for a primary alternating current electrical power distribution network (12), having power factor compensation and distortion factor compensation, comprising at least one PFC circuit (11) which is connected to the primary distribution network and which supplies direct current power on a direct current power supply line (13) and means for storage and restitution of electrical energy (14) which are connected to the direct current power supply line (13) by means of a commutation circuit (16) which is configured to have two operating states, a first operating state in which the electrical energy stored in the storage means (14) is discharged on the direct current power supply line (13) and a second operating state in which the storage means (13) are charged via the direct current electrical power supply line (13); **characterised in that** it further comprises two control circuits (21, 25):
- a first control circuit (25) which determines the operating state of the commutation circuit by means of comparison of the value of the voltage on the power supply line (13) with a first reference voltage, the commutation circuit (16) being positioned in the first operating state if the voltage on the supply line (13) is less than the first reference voltage and in the second operating state if the reverse is true;
- a second control circuit (21) which regulates the energy supplied by the PFC (11) on the power supply line (13) in accordance with the voltage present at the output of the storage means (14), by comparing this voltage with a second reference voltage.

2. System according to claim 1, **characterised in that** since the operating voltage of the electrical energy storage means (14) is substantially less than the electrical voltage supplied by the electrical power supply line (13), the commutation circuit (16) is a reversible chopper circuit which increases the electrical voltage supplied by the storage means (14) when they are discharged on the power supply line (13) and which decreases the voltage of the electrical current which is taken from the power supply line (13) when the storage means (14) are recharged by the power supply line (13).

3. System according to either claim 1 or claim 2, **characterised in that** the energy storage means (14) comprise a bank of accumulators.

4. System according to either claim 1 or claim 2, **characterised in that** the energy storage means (14) comprise a bank of capacitors.

5. System according to any one of the preceding claims, **characterised in that** the first and second control circuit (21, 25) comprise an integrating amplifier (PI) which integrates the variation of the voltage measured relative to the reference voltage.

6. System according to any one of the preceding claims, **characterised in that** the second control circuit further comprises a filtering circuit (26) which is configured to limit the pass-band of the control loop of the PFC.

7. Secondary alternating current electrical energy distribution network, having an improved charge factor and distortion factor, **characterised in that** it comprises a rectifier system according to any one of the preceding claims and an inverter circuit (51) which is mounted on the direct current power supply line (13) of the system.

8. Secondary alternating current electrical energy distribution network according to claim 7, **characterised in that** the inverter circuit (51) is a controlled inverter circuit which is configured to supply pulses of alternating current under the action of a cutting command (52).

9. Secondary alternating current electrical energy distribution network according to either claim 7 or claim 8, **characterised in that** the inverter circuit (51) is a multi-level inverter circuit.

10. Secondary alternating current electrical energy distribution network according to either claim 7 or claim 8, **characterised in that** the inverter circuit (51) is a multi-phase inverter circuit.

## Patentansprüche

1. Gleichrichtersystem für ein primäres Wechselstromverteilungsnetz (12) mit einem Leistungskompensationsfaktor und einem Oberschwingungsgehalt, umfassend wenigstens eine PFC-Schaltung (11), die mit dem primären Verteilungsnetz verbunden ist und Gleichstrom auf einer Gleichstromversorgungsleitung (13) zuführt, und Mittel zum Speichern und Wiederherstellen von elektrischer Energie (14), die mit der Gleichstromversorgungsleitung (13) über einen Schaltkreis (16) verbunden sind, der zum Präsentieren von zwei Funktionszuständen konfiguriert ist, einem ersten Funktionszustand, in dem er ein Entladen von in dem Speichermittel (14) gespeicherter elektrischer Energie auf der Gleichstromversorgungsleitung (13) bewirkt, und einem zweiten Funktionszustand, in dem er das Laden der Speichermittel (13) über die Gleichstromversorgungsleitung (13) bewirkt; **dadurch gekennzeichnet, dass** es darüber hinaus zwei Steuerkreise (21, 25) umfasst:
- einen ersten Steuerkreis (25), der den Funktionszustand des Schaltkreises durch Vergleichen des Wertes der Spannung auf der Versorgungsleitung (13) mit einer ersten Referenzspannung ermittelt, wobei sich der Schaltkreis (16) im ersten Funktionszustand befindet, wenn die Spannung auf der Versorgungsleitung (13) niedriger ist als die erste Referenzspannung, und im gegenteiligen Fall im zweiten Funktionszustand;
- einen zweiten Steuerkreis (21), der die von der PFC (11) auf der Versorgungsleitung (13) zugeführte Energie in Abhängigkeit von der am Ausgang der Speichermittel (14) anliegenden Spannung durch Vergleichen dieser Spannung mit einer zweiten Referenzspannung regelt.

2. System nach Anspruch 1, **dadurch gekennzeichnet, dass** der Schaltkreis (16), da die Betriebsspannung der Mittel (14) zum Speichern von elektrischer Energie erheblich niedriger ist als die durch die Versorgungsleitung (13) gelieferte elektrische Spannung, eine reversible Zerhackerschaltung ist, die die von den Speichermitteln (14) gelieferte elektrische Spannung erhöht, wenn diese auf der Versorgungsleitung (13) entladen werden, und die Spannung des auf der Versorgungsleitung (13) abgegriffenen elektrischen Stroms senkt, wenn die Speichermittel (14) von der Versorgungsleitung (13) neu geladen werden.

3. System nach Anspruch 1 oder 2, **dadurch gekennzeichnet, dass** die Energiespeichermittel (14) eine Akku-Batterie umfassen.

4. System nach Anspruch 1 oder 2, **dadurch gekennzeichnet, dass** die Energiespeichermittel (14) eine Kondensatorbatterie umfassen.

5. System nach einem der vorherigen Ansprüche, **dadurch gekennzeichnet, dass** der erste und der zweite Steuerkreis (21, 25) einen Integrationsverstärker (PI) umfassen, der die Variation der gemessenen Spannung mit Bezug auf die Referenzspannung integriert.

6. System nach einem der vorherigen Ansprüche, **dadurch gekennzeichnet, dass** der zweite Steuerkreis darüber hinaus einen Filterkreis (26) umfasst, der zum Begrenzen des Durchlassbandes der PFC-Steuerschleife konfiguriert ist.

7. Sekundäres Wechselstromenergieverteilungsnetz mit verbessertem Lastfaktor und Oberschwingungsgehalt, **dadurch gekennzeichnet, dass** es ein Gleichrichtersystem nach einem der vorherigen Ansprüche und eine Wechselrichterschaltung (51) umfasst, die auf der Gleichstromversorgungsleitung (13) des Systems montiert ist.

8. Sekundäres Wechselstromenergieverteilungsnetz nach Anspruch 7, **dadurch gekennzeichnet, dass** die Wechselrichterschaltung (51) eine gesteuerte Wechselrichterschaltung ist, die zum Zuführen der Wechselstromimpulse unter der Wirkung einer Anschnittsteuerung (52) konfiguriert ist.

9. Sekundäres Wechselstromenergieverteilungsnetz nach Anspruch 7 oder 8, **dadurch gekennzeichnet, dass** die Wechselrichterschaltung (51) eine Mehrpegel-Wechselrichterschaltung ist.

10. Sekundäres Wechselstromenergieverteilungsnetz nach Anspruch 7 oder 8, **dadurch gekennzeichnet, dass** die Wechselrichterschaltung (51) eine Mehrphasen-Wechselrichterschaltung ist.
